(19) **Europäisches Patentamt** / **European Patent Office** / **Office européen des brevets**

(11) **EP 4 650 719 A1**

(12) # EUROPÄISCHE PATENTANMELDUNG

(43) Veröffentlichungstag:
**19.11.2025 Patentblatt 2025/47**

(21) Anmeldenummer: **25167787.8**

(22) Anmeldetag: **01.04.2025**

(51) Internationale Patentklassifikation (IPC):
**G01D 5/12** (2006.01)     **G01D 5/14** (2006.01)

(52) Gemeinsame Patentklassifikation (CPC):
**G01D 5/145**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **14.05.2024 DE 102024001566**

(71) Anmelder: **Dr. Johannes Heidenhain GmbH
83301 Traunreut (DE)**

(72) Erfinder:
• **Schneider, Dr. Johannes
83278 Traunstein (DE)**
• **Hilverkus, Dr. Johannes
83250 Marquartstein (DE)**

(54) **MAGNETISCHE WINKELMESSEINRICHTUNG**

(57) Die Erfindung betrifft eine Winkelmesseinrichtung umfassend eine erste Bauteilgruppe (1) und eine zweite Bauteilgruppe (2; 2'), wobei die Bauteilgruppen (1, 2; 2') relativ zueinander um eine Achse (A) drehbar angeordnet sind. Die erste Bauteilgruppe (1) umfasst einen Positionsdetektor (1.5) und ggf. einen Domänenwandspeicher (1.1), wobei der Positionsdetektor (1.5) auf einer Leiterplatte (1.2) montiert ist. Die zweite Bauteilgruppe (2; 2') weist eine Magnetanordnung auf, die mehrere Magnete (2.1 bis 2.8) umfasst, die als ein Halbach-Array um die Achse (A) herum angeordnet sind, oder als ein Halbach-Zylinder (2.9') ausgestaltet ist. Bei einer Drehung der Magnetanordnung relativ zur Leiterplatte (1.2) ist durch den Positionsdetektor (1.5) eine Winkelstellung detektierbar. (Figur 2)

**Fig. 2**

EP 4 650 719 A1

**Beschreibung**

## GEBIET DER TECHNIK

Die Erfindung betrifft eine magnetische Winkelmesseinrichtung gemäß dem Anspruch 1.

Magnetische Winkelmesseinrichtungen werden beispielsweise als Drehgeber, die auf einem magnetischen Abtastprinzip beruhen, zur Bestimmung der Winkellage zweier relativ zueinander drehbarer Maschinenteile verwendet.

Häufig werden derartige Messeinrichtungen beziehungsweise Messgeräte für elektrische Antriebe zur Bestimmung der Relativbewegung beziehungsweise der Relativlage von entsprechenden Maschinenteilen eingesetzt. In diesem Fall werden die erzeugten Positionswerte einer Folgeelektronik zur Ansteuerung der Antriebe über eine entsprechende Schnittstellenanordnung zugeführt.

Für viele Anwendungen von Winkelmesseinrichtungen ist es wichtig zumindest Umdrehungsanzahlen oder Grobpositionen auch bei temporär fehlender Stromversorgung zu erfassen und nicht-flüchtig zu speichern. Häufig werden zu diesem Zweck so genannte Multi-Turn-Winkelmesseinrichtungen eingesetzt, durch die eine absolute Positionsbestimmung über viele Umdrehungen hinweg möglich ist.

## STAND DER TECHNIK

In der DE 10 2022 106 330 A1 wird eine magnetische Messeinrichtung zur Messung einer Winkelstellung beschrieben, die einen Domänenwandspeicher als Multi-Turn-Sensor aufweist. Dessen Domänenwände können von einem oder zwei Permanentmagneten, die relativ zum Domänenwandspeicher drehbar sind, bewegt werden.

## ZUSAMMENFASSUNG DER ERFINDUNG

Der Erfindung liegt die Aufgabe zugrunde eine magnetische Winkelmesseinrichtung zu schaffen, durch die ein präzises und zuverlässiges Betriebsverhalten erreichbar ist und die wirtschaftlich herstellbar ist.

Diese Aufgabe wird erfindungsgemäß durch die Merkmale des Anspruches 1 gelöst.

Demnach umfasst die magnetische Winkelmesseinrichtung eine erste Bauteilgruppe und eine zweite Bauteilgruppe, wobei die Bauteilgruppen in einer Messrichtung beziehungsweise in Umfangsrichtung relativ zueinander drehbar angeordnet sind. Die erste Bauteilgruppe umfasst einen Positionsdetektor, der auf einer Leiterplatte montiert ist. Die zweite Bauteilgruppe weist eine Magnetanordnung auf. Die Magnetanordnung umfasst mehrere Magnete, die als ein Halbach-Array um die Achse herum angeordnet sind. Alternativ kann die Magnetanordnung als ein Halbach-Zylinder ausgestaltet sein. Zudem ist die Magnetanordnung beabstandet zum Positionsdetektor so angeordnet, dass bei einer Drehung der Magnetanordnung relativ zur Leiterplatte durch den Positionsdetektor eine relative Winkelstellung zwischen der ersten Bauteilgruppe und der zweiten Bauteilgruppe detektierbar ist.

Insbesondere kann der Positionsdetektor in axialer Richtung versetzt zur Magnetanordnung angeordnet sein. Alternativ oder ergänzend kann die Leiterplatte in axialer Richtung versetzt zur Magnetanordnung angeordnet sein.

Vorteilhafterweise wird der Positionsdetektor von der Achse geschnitten beziehungsweise durchdrungen. Häufig wird eine Anordnung, bei welcher die (Dreh-) Achse den Positionsdetektor schneidet als "on-axis"-Konfiguration bezeichnet.

Als Magnetisierungsrichtung kann die Richtung einer Verbindungslinie zwischen dem Südpol und dem Nordpol eines Magnets verstanden werden. Ein Magnetisierungswinkel ist an einem bestimmten Punkt am Umfang bzw. an einen bestimmten Umfangswinkel ein Winkel zwischen zueinander parallelen Linien und der Magnetisierungsrichtung.

Mit Vorteil ist die Magnetanordnung so ausgestaltet, dass die Magnetisierung bei einem ersten Umfangswinkel so orientiert ist, dass diese einen ersten Magnetisierungswinkel aufweist. Bei einem zweiten Umfangswinkel weist die Magnetisierung einen zweiten Magnetisierungswinkel auf. Dabei ist der erste Magnetisierungswinkel gegenüber dem zweiten Magnetisierungswinkel um einen Winkel gedreht, der doppelt so groß ist wie die Differenz zwischen dem ersten Umfangswinkel und dem zweiten Umfangswinkel.

Der Halbach-Zylinder kann einstückig ausgestaltet oder aus mehreren Segmenten zusammengesetzt sein.

In weiterer Ausgestaltung der Erfindung umfasst die erste Bauteilgruppe einen Domänenwandspeicher. Der Domänenwandspeicher ist auch auf einer Leiterplatte montiert, so dass bei einer Drehung der Magnetanordnung relativ zur Leiterplatte durch den Domänenwandspeicher Umdrehungen zählbar sind. Die Magnetanordnung dient also in dieser Ausführungsform nicht nur quasi als Winkelskala für die feinere Bestimmung der relativen Winkelstellung zwischen der ersten Bauteilgruppe und der zweiten Bauteilgruppe, sondern auch zur Zählung von Umdrehungen durch den Domänenwandspeicher.

Mit Vorteil umfasst die erste Bauteilgruppe ein Gehäuse, welches unter anderem zur Abschirmung von Störfeldern dient und so ausgestaltet ist, dass dieses die Magnetanordnung über den Umfang hinweg beziehungsweise umlaufend umschließt und mit Vorteil auch den Positionsdetektor und / oder den Domänenwandspeicher über den Umfang hinweg umschließt. Zudem kann das Gehäuse so ausgestaltet sein, dass dieses die Magnetanordnung und / oder auch den Positionsdetektor und / oder den Domänenwandspeicher auch axial umschließt. Dadurch kann unter geeigneten Randbedingen die Abschirmwirkung von Störfeldern erhöht werden. Insbesondere kann das Gehäuse die zweite Bauteilgruppe umgreifen.

In weiterer Ausgestaltung der Erfindung ist direkt an der Leiterplatte eine elektrische Kupplung befestigt, die insbesondere das Gehäuse durchdringt, so dass die Winkelmesseinrichtung durch eine Steckerverbindung an ein weiteres elektronisches Gerät elektrisch anschließbar ist. Insbesondere kann die elektrische Kupplung direkt auf der Leiterplatte kontaktiert sein.

Mit Vorteil umfasst der Positionsdetektor zumindest ein magnetoresistives Element, das beispielsweise auf einem AMR-, GMR- oder TMR-Effekt beruht. Alternativ oder ergänzend könnte der Positionsdetektor auch mindestens ein Hall-Element umfassen. Demnach beruht die Abtastung auf einen magnetischen Prinzip, weshalb die Winkelmesseinrichtung als magnetische Winkelmesseinrichtung bezeichnet wird.

Vorteilhafterweise sind zumindest zwei der mehreren Magnete, die als ein Halbach-Array angeordnet sind, als jeweils identische Magnete beziehungsweise baugleiche Magnete ausgestaltet. Die identischen Magnete können insbesondere jeweils gedreht zueinander angeordnet sein. Die Drehungen der Magnete erfolgen insbesondere jeweils um virtuelle Linien, die parallel zur Achse verlaufen, um welche die erste Bauteilgruppe relativ zur zweiten Bauteilgruppe drehbar ist.

Der Halbach-Zylinder und / oder die Magnete können durch ein Sinterverfahren oder ein Gussverfahren hergestellt sein. Alternativ umfasst das Material des Halbach-Zylinders und / oder der Magnete Kunststoff mit einem magnetisierbaren Füllstoff. Insbesondere können die Magnete und / oder der Halbach-Zylinder durch ein Pressverfahren oder Spritzgussverfahren hergestellt sein.

Der Domänenwandspeicher umfasst einen in einer Fläche verlaufenden Domänenwandleiter. Es sind Domänenwandleiter bekannt, die im Wesentlichen als eine offene Spirale ausgestaltet sind und solche, die einen geschlossenen Verlauf aufweisen.

Ein Domänenwandleiter besteht aus einem magnetisierbaren Material und ist im Zusammenhang mit der vorliegenden Erfindung insbesondere als zumindest eine Leiterspur beziehungsweise Leiterbahn oder ein Nanodraht ausgestaltet. In dem Domänenwandleiter kann Information in Form von gegensätzlich magnetisierten Regionen (Domänen) gespeichert werden. Die Domänen sind entlang der Leiterspur durch so genannte Domänenwände getrennt, die durch Magnetfelder verschoben werden können, wobei sich die Positionen der Domänen ändern.

Mit Vorteil umfasst der Domänenwandspeicher ein insbesondere ebenes Substrat und der Domänenwandleiter ist als eine Leiterbahn auf dem Substrat ausgestaltet. In diesem Fall ist die Fläche, in welcher der Domänenwandleiter verläuft, eben.

Die Strukturbreite des Domänenwandleiters beträgt üblicherweise weniger als 500 nm häufig weniger als 300 nm, und die Dicke beziehungsweise Schichtdicke des Domänenwandleiters beträgt weniger als 60 nm. Der Domänenwandspeicher kann mehrere Domänenwandleiter aufweisen.

Der Domänenwandspeicher weist weiterhin Ausleseelemente auf, durch die (an der jeweiligen Position der Ausleseelemente) der lokale Magnetisierungszustand des Domänenwandleiters bestimmbar ist. Durch die Ausleseelemente ist somit jeweils ein Magnetisierungszustand des Domänenwandleiters bestimmbar. Die Ausleseelemente sind bezüglich des Domänenwandleiters ortsfest angeordnet. Als Ausleseelemente kommen beispielsweise GMR- oder TMR-Sensoren in Betracht.

Vorteilhafte Ausbildungen der Erfindung entnimmt man den abhängigen Ansprüchen.

Weitere Einzelheiten und Vorteile der erfindungsgemäßen Winkelmesseinrichtung ergeben sich aus der nachfolgenden Beschreibung von Ausführungsbeispielen anhand der beiliegenden Figuren.

## KURZE BESCHREIBUNG DER ZEICHNUNGEN

Es zeigen die

Figur 1      eine Schnittansicht der Winkelmesseinrichtung,

Figur 2      eine Draufsicht auf Magnete der zweiten Bauteilgruppe,

Figur 3      eine Draufsicht auf einen Domänenwandleiter,

Figur 4      eine Draufsicht auf einen Halbach-Zylinder der zweiten Bauteilgruppe, gemäß einem zweiten Ausführungsbeispiel.

## BESCHREIBUNG DER AUSFÜHRUNGSFORMEN

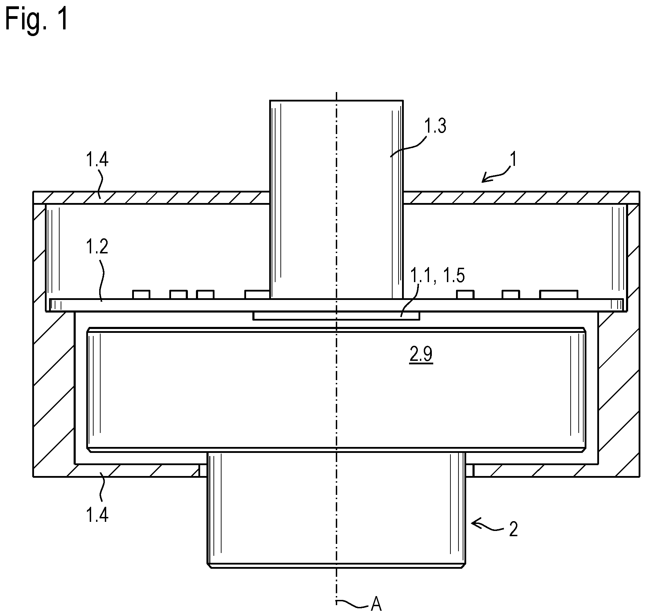

In der Figur 1 ist eine Winkelmesseinrichtung dargestellt, die eine erste Bauteilgruppe 1 und eine zweite Bauteilgruppe 2 umfasst, wobei die Bauteilgruppen 1, 2 relativ zueinander um eine Achse A drehbar angeordnet sind. Die erste Bauteilgruppe umfasst eine Leiterplatte 1.2, einen Positionsdetektor 1.5, einen Domänenwandspeicher 1.1 eine elektrische Kupplung 1.3 und ein Gehäuse 1.4.

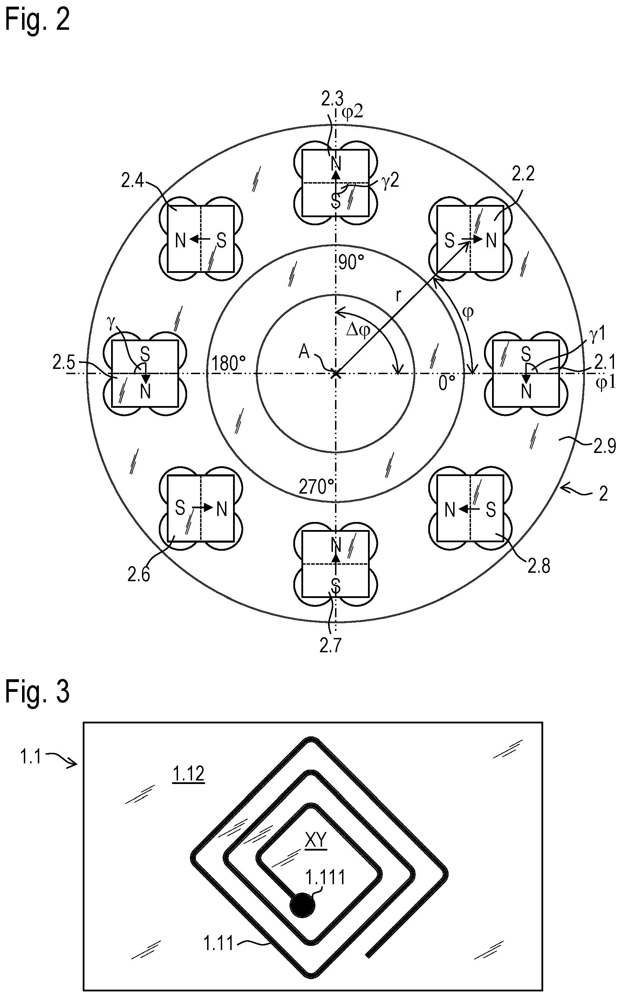

Die zweite Bauteilgruppe 2 umfasst im vorgestellten ersten Ausführungsbeispiel einen Trägerkörper 2.9, der hier gemäß der Figur 2 stirnseitig eine Magnetanordnung aufweist, die eine Vielzahl von Magneten 2.1 bis 2.8 umfasst. Die Magnete sind in dem Trägerkörper 2.9 eingebettet, der eine zentrale Bohrung mit Absatz aufweist, welche eine Befestigungsschraube, die vorzugsweise nicht magnetisch ist, aufnehmen kann. Der Trägerkörper 2.9 kann beispielsweise aus einem Kunststoffmaterial hergestellt sein.

Die Magnete 2.1 bis 2.8 sind gemäß einem Halbach-Array angeordnet. Im vorgestellten Ausführungsbeispiel sind acht identische quaderförmige Magnete 2.1 bis 2.8 entlang einer Kreislinie versetzt, beziehungsweise in unterschiedlichen Umfangswinkeln $\varphi$ angeordnet, wobei die Anordnung einer so genannten k = 2 Halbach Anordnung entspricht. In der Figur 2 sind die Magnetisierungsrichtungen über dem Umfang durch Pfeile dargestellt. Als Magnetisierungsrichtung kann die Richtung einer Verbindungslinie zwischen dem

Südpol und dem Nordpol eines Magnets verstanden werden. Die Magnetisierungsrichtungen sind in der folgenden Tabelle zusammengefasst:

| Magnet | Umfangswinkel $\varphi$ | Magnetisierungswinkel $\gamma$ |
|--------|------------------------|-------------------------------|
| 2.1 | 0° | 270° |
| 2.2 | 45° | 0° |
| 2.3 | 90° | 90° |
| 2.4 | 135° | 180° |
| 2.5 | 180° | 270° |
| 2.6 | 225° | 0° |
| 2.7 | 270° | 90° |
| 2.8 | 315° | 180° |

Wie in der Tabelle gezeigt, ändert sich der Magnetisierungswinkel $\gamma$, welcher der Winkel der Pfeilrichtung der einzelnen Magnete 2.1 bis 2.8 und einer stets gleich orientierten Linie ist, doppelt so schnell (k = 2) entlang einer Umfangsrichtung wie der Umfangswinkel $\varphi$, durch den die Winkelpositionen der Magnete 2.1 bis 2.8 entlang der Umfangsrichtung definiert sind. Im vorgestellten Ausführungsbeispiel sind die Magnete 2.1 bis 2.8 jeweils um 45° versetzt ($\Delta\varphi$ = 45°) über dem Umfang angeordnet. Bei $\Delta\varphi$ = 45° ändert sich der Magnetisierungswinkel um $\Delta\gamma$ = 90°. Im Allgemeinen gilt hier:

$$\Delta\gamma = 2 \cdot \Delta\varphi.$$

Beispielsweise liegt bei einem ersten Umfangswinkel $\varphi1$ = 0° ein erster Magnetisierungswinkel $\gamma1$ =270° vor. Wenn man sich entlang einer Umfangslinie weiter bewegt bis zu einem zweiten Umfangswinkel $\varphi2$, z.B. $\varphi2$ = 90° liegt ein zweiter Magnetisierungswinkel $\gamma2$ = 90° vor. Der erste Magnetisierungswinkel $\gamma1$ ist dann gegenüber dem zweiten Magnetisierungswinkel $\gamma2$ um einen Winkel $\Delta\gamma$ = 180° gedreht, während die Differenz $\Delta\varphi$ zwischen dem ersten Umfangswinkel $\varphi1$ und dem zweiten Umfangswinkel $\varphi2$ 90° beträgt, also $\Delta\varphi$ = 90°.

Gemäß der Figur 1 umfasst die erste Bauteilgruppe 1 den Domänenwandspeicher 1.1 sowie den Positionsdetektor 1.5, der sich in dem gleichen Package befindet wie der Domänenwandspeicher 1.1. Durch den Positionsdetektor 1.5 kann das Magnetfeld der Magnetanordnung abgetastet werden und in elektrische Signale umgewandelt werden, welche die Information über die Winkelstellung innerhalb einer Umdrehung beinhalten. Der Positionsdetektor 1.5 kann magnetoresistive Elemente oder beispielsweise Hallelemente umfassen.

Der Domänenwandspeicher 1.1 umfasst gemäß der Figur 3 einen Domänenwandleiter 1.11 und ein Substrat 1.12, wobei der Domänenwandleiter 1.11 in Form einer Leiterbahn auf dem Substrat 1.12 aufgebracht ist und in (beziehungsweise auf) einer ersten Fläche XY verläuft. Der Domänenwandleiter 1.11 weist an einem Ende einen Domänenwandgenerator 1.111 auf. Im vorgestellten Ausführungsbeispiel weist das Substrat 1.12 eine mechanisch tragende Siliziumschicht auf, wobei das Substrat 1.12 eben ausgestaltet ist und der Domänenwandleiter 1.11 ein Teil eines CMOS-Chips sein kann. Alternativ kann das Substrat eine Glasschicht aufweisen. Der Domänenwandleiter 1.11 umfasst ein weichmagnetisches Material, beispielsweise eine Ni-Fe-Legierung. Der Domänenwandleiter 1.11 kann, wie in der Figur 3 dargestellt, als eine offene Spirale ausgestaltet sein oder einen geschlossenen Verlauf aufweisen.

Im Betrieb der Winkelmesseinrichtung liegen die erste Bauteilgruppe 1 und die zweite Bauteilgruppe 2 einander gegenüber. Im vorgestellten Ausführungsbeispiel kann die erste Bauteilgruppe 1 als Stator und die zweite Bauteilgruppe 2 als Rotor betrieben werden.

Die Magnetanordnung wird durch den Positionsdetektor 1.5 abgetastet, welcher elektrische Signale mit der Positionsinformation liefert, die über die elektrische Kupplung 1.3 und dann weiter über ein Kabel an eine weitere Elektronik geleitet werden können.

Der Domänenwandspeicher 1.1 wird zur Gewährleistung einer Multi-Turn-Funktionalität, also das Zählen von vielen Umdrehungen beziehungsweise Durchläufen, verwendet.

Bei jeder Viertelumdrehung der zweiten Bauteilgruppe 2 bewegt sich die Domänenwand, beziehungsweise bewegen sich die Domänenwände, weiter.

Die Magnetisierungsrichtungen innerhalb von Abschnitten des Domänenwandleiters 1.11 und damit die Positionen der Domänenwände können durch die im Domänenwandspeicher 1.1 integrierten Ausleseelemente detektiert werden. Auf diese Weise ist eine Zählung von Umdrehungen beziehungsweise eine Speicherung der Umdrehungsinformation in einer Winkelmesseinrichtung möglich, auch wenn keine Hilfsenergie nutzbar ist. Dies ist beispielsweise wichtig, wenn bei einem Stromausfall eine Welle etwa durch Gewichtsbelastung bewegt wird. Die Domänenwände werden im Übrigen drehrichtungsabhängig verschoben, so dass der Domänenwandspeicher 1.1 zuverlässig bei Anwendungen eingesetzt werden kann, die beide Drehrichtungen zulassen.

Aus der Abtastung des Magnetfeldes durch den nicht näher gezeigten Positionsdetektor 1.5 resultiert eine vergleichsweise genaue Bestimmung der Winkelposition innerhalb einer Umdrehung. Zur absoluten Bestimmung der Winkelposition über mehrere Umdrehungen hinweg (Multi-Turn-Funktionalität) muss die mit dem Positionsdetektor 1.5 ermittelte Winkelposition (Feinposition) mit der Umdrehungsinformation (Grobposition) des Domänenwandspeichers 1.1 synchronisiert werden.

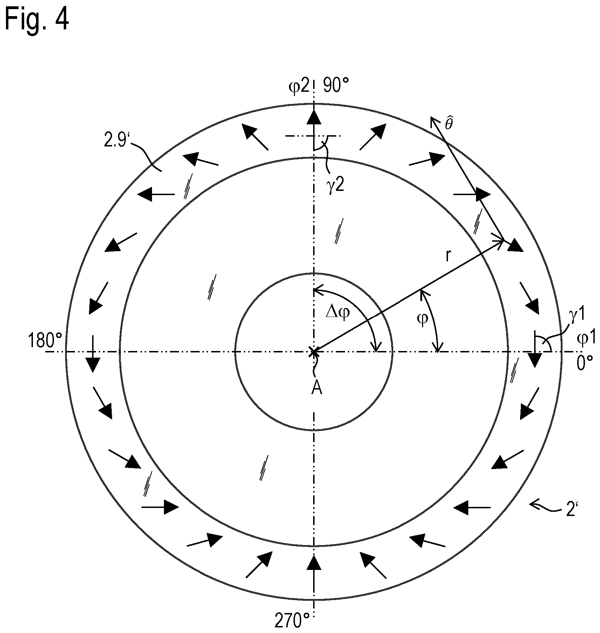

Gemäß eines in Figur 4 dargestellten Ausführungsbeispiels wird in der zweiten Bauteilgruppe 2' anstelle der diskreten Magnete 2.1 bis 2.8 ein einstückiger Halbach-Zylinder 2.9' verwendet. Dieser ist vergleichsweise komplex, insbesondere anisotrop, magnetisiert, so dass dessen Magnetisierungsvektor durch folgende Formel definiert werden kann:

$$\vec{M} = M_r \left[ cos\left((k-1)\left(\varphi - \frac{\pi}{2}\right)\right)\hat{r} + sin\left((k-1)\left(\varphi - \frac{\pi}{2}\right)\right)\hat{\theta}\right],$$

mit

$M_r$: magnetische Remanenz,
$k$: natürliche Zahl,
$\varphi$: Umfangswinkel,
$\hat{r}, \hat{\theta}$: Einheitsvektoren in Polarkoordinaten, deren Richtungen von der Position des betrachteten Punktes abhängen.

Für die $k = 2$ Halbach Anordnung gilt dann:

$$\vec{M} = M_r \left[ cos\left(\varphi - \frac{\pi}{2}\right)\hat{r} + sin\left(\varphi - \frac{\pi}{2}\right)\hat{\theta}\right]$$

In der Figur 4 sind die Magnetisierungsrichtungen über dem Umfang durch Pfeile dargestellt.

Somit gilt auch hier, dass die Magnetanordnung so ausgestaltet ist, dass der erste Magnetisierungswinkel $\gamma 1$ gegenüber dem zweiten Magnetisierungswinkel $\gamma 2$ um einen Winkel $\Delta\gamma$ gedreht ist, der doppelt so groß ist wie die Differenz $\Delta\varphi$ zwischen dem ersten Umfangswinkel $\varphi 1$ zweiten Umfangswinkel $\varphi 2$:

$$2 \cdot \Delta\varphi = \gamma 1 - \gamma 2 = \Delta\gamma$$

**Patentansprüche**

1. Winkelmesseinrichtung umfassend eine erste Bauteilgruppe (1) und eine zweite Bauteilgruppe (2; 2'), wobei die Bauteilgruppen (1, 2; 2') relativ zueinander um eine Achse (A) drehbar angeordnet sind, wobei

- die erste Bauteilgruppe (1)
einen Positionsdetektor (1.5) umfasst, wobei der Positionsdetektor (1.5) auf einer Leiterplatte (1.2) montiert ist,
- die zweite Bauteilgruppe (2; 2')
eine Magnetanordnung aufweist, die

a) mehrere Magnete (2.1 bis 2.8) umfasst, die als ein Halbach-Array um die Achse (A) herum angeordnet sind, oder
b) als ein Halbach-Zylinder (2.9') ausgestaltet ist, wobei die Magnetanordnung beabstandet zum Positionsdetektor (1.5) so angeordnet ist, dass bei einer Drehung der Magnetanordnung relativ zur Leiterplatte (1.2) durch den Positionsdetektor (1.5) eine Winkelstellung detektierbar ist.

2. Winkelmesseinrichtung gemäß dem Anspruch 1, wobei die Magnetanordnung so ausgestaltet ist, dass die Magnetisierung bei einem ersten Umfangswinkel ($\varphi$1) einen ersten Magnetisierungswinkel (y1) aufweist und bei einem zweiten Umfangswinkel ($\varphi$2) einen zweiten Magnetisierungswinkel (y2) aufweist, wobei der erste Magnetisierungswinkel (y1) gegenüber dem zweiten Magnetisierungswinkel (y2) um einen Winkel ($\Delta\gamma$) gedreht ist, der doppelt so groß ist wie die Differenz ($\Delta\varphi$) zwischen dem ersten Umfangswinkel ($\varphi$1) und dem zweiten Umfangswinkel ($\varphi$2).

3. Winkelmesseinrichtung gemäß dem Anspruch 1 oder 2, wobei die erste Bauteilgruppe (1) einen Domänenwandspeicher (1.1) umfasst, wobei bei einer Drehung der Magnetanordnung relativ zum Domänenwandspeicher (1.1) durch den Domänenwandspeicher (1.1) Umdrehungen zählbar sind.

4. Winkelmesseinrichtung gemäß dem Anspruch 3, wobei der Domänenwandspeicher (1.1) auf der Leiterplatte (1.2) montiert ist.

5. Winkelmesseinrichtung gemäß einem der vorhergehenden Ansprüche, wobei die erste Bauteilgruppe (1) ein Gehäuse (1.4) umfasst, wobei das Gehäuse (1.4) so ausgestaltet ist, dass dieses zur Abschirmung von Störfeldern den Positionsdetektor 1.5 und die Magnetanordnung über den Umfang hinweg umschließt.

6. Winkelmesseinrichtung gemäß dem Anspruch 5, wobei das Gehäuse (1.4) zur Abschirmung von Störfeldern den Domänenwandspeicher (1.1) über den Umfang hinweg umschließt.

7. Winkelmesseinrichtung gemäß einem der vorhergehenden Ansprüche, wobei an der Leiterplatte (1.2) eine elektrische Kupplung befestigt ist.

8. Winkelmesseinrichtung gemäß einem der vorhergehenden Ansprüche, wobei der Positionsdetektor (1.5) zumindest ein magnetoresistives Element oder ein Hall-Element umfasst.

9. Winkelmesseinrichtung gemäß einem der vorhergehenden Ansprüche, wobei zumindest einige der mehreren Magnete (2.1 bis 2.8), die als ein Halbach-Array angeordnet sind, als jeweils identische Magnete ausgestaltet sind.

Fig. 1

# Fig. 2

# Fig. 3

Fig. 4

EUROPÄISCHER RECHERCHENBERICHT

Nummer der Anmeldung

EP 25 16 7787

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 118376 A1 (INFINEON TECHNOLOGIES AG [DE]) 29. März 2018 (2018-03-29) | 1,2,5, 7-9 | INV. G01D5/12 G01D5/14 |
| A | * Abbildungen 10-13 * * Anspruch 13 * * Absätze [0129] - [0135] * ----- | 3,4,6 | |
| X | WO 2023/043766 A1 (NOVANTA CORP [US]) 23. März 2023 (2023-03-23) * Abbildungen 1, 2 * ----- | 1,2 | |
| A | WO 2023/118012 A1 (ANALOG DEVICES INTERNATIONAL UNLIMITED CO [IE]) 29. Juni 2023 (2023-06-29) * Abbildung 9 * * Absätze [0011] - [0019], [0042] - [0048] * ----- | 3,4,6 | |
| A | DE 10 2019 113908 A1 (ANALOG DEVICES GLOBAL UNLIMITED CO [BM]) 19. Dezember 2019 (2019-12-19) * Abbildungen 1, 2 * * Absatz [0002] * ----- | 3,4,6 | RECHERCHIERTE SACHGEBIETE (IPC) G01D |
| A | DE 10 2020 107433 A1 (ANALOG DEVICES INTERNATIONAL UNLIMITED CO [IE]) 24. September 2020 (2020-09-24) * Abbildung 1 * * Absatz [0078] * ----- | 3,4,6 | |
| A | DE 10 2022 106330 A1 (ANALOG DEVICES INTERNATIONAL UNLIMITED CO [IE]) 29. September 2022 (2022-09-29) * Abbildung 2 * * Absätze [0014], [0036] * ----- | 1-9 | |

Der vorliegende Recherchenbericht wurde für alle Patentansprüche erstellt

| Recherchenort | Abschlußdatum der Recherche | Prüfer |
|---|---|---|
| München | 4. September 2025 | Kuchenbecker, J |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 16 7787

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-09-2025

| Im Recherchenbericht angeführtes Patentdokument | Datum der Veröffentlichung | Mitglied(er) der Patentfamilie | Datum der Veröffentlichung |
|---|---|---|---|
| DE 102016118376 A1 | 29-03-2018 | DE 102016118376 A1 | 29-03-2018 |
| | | US 2018087926 A1 | 29-03-2018 |
| WO 2023043766 A1 | 23-03-2023 | CN 117940743 A | 26-04-2024 |
| | | EP 4402439 A1 | 24-07-2024 |
| | | US 2023082380 A1 | 16-03-2023 |
| | | US 2024393140 A1 | 28-11-2024 |
| | | WO 2023043766 A1 | 23-03-2023 |
| WO 2023118012 A1 | 29-06-2023 | CN 118575058 A | 30-08-2024 |
| | | DE 112022006123 T5 | 05-12-2024 |
| | | JP 2025500385 A | 09-01-2025 |
| | | US 2023194237 A1 | 22-06-2023 |
| | | WO 2023118012 A1 | 29-06-2023 |
| DE 102019113908 A1 | 19-12-2019 | DE 102019113908 A1 | 19-12-2019 |
| | | JP 6924796 B2 | 25-08-2021 |
| | | JP 2019219392 A | 26-12-2019 |
| | | JP 2021152542 A | 30-09-2021 |
| | | US 2019383643 A1 | 19-12-2019 |
| DE 102020107433 A1 | 24-09-2020 | KEINE | |
| DE 102022106330 A1 | 29-09-2022 | CN 115128524 A | 30-09-2022 |
| | | DE 102022106330 A1 | 29-09-2022 |
| | | GB 2607667 A | 14-12-2022 |
| | | US 2022308132 A1 | 29-09-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102022106330 A1